# EUROPEAN PATENT SPECIFICATION

(11) **EP 1 282 934 B1**
(45) Date of publication and mention of the grant of the patent: **06.10.2010**
(21) Application number: 01918056.1
(22) Date of filing: 23.03.2001
(51) Int. Cl.: H02M 7/758, H02M 7/537

(54) **A CONVERTER DEVICE AND A METHOD FOR THE CONTROL THEREOF**
EINE WANDLERVORRICHTUNG UND EIN VERFAHREN ZUR STEUERUNG DERSELBEN
DISPOSITIF CONVERTISSEUR ET PROCEDE DE COMMANDE

(30) Priority: 16.05.2000 SE 0001782
(43) Date of publication of application: 12.02.2003
(73) Proprietor: ABB AB, 721 83 Västerås (SE)
(72) Inventor: LINDBERG, Johan, S-413 01 Göteborg (SE); SVENSSON, Kjell, S-771 41 Ludvika (SE); BIJLENGA, Bo, S-662 33 Amal (SE); JONSSON, Tomas, SE-723 55 Västeras (SE); STERGIOPOULOS, Fotis, GR-593 00 Alexandria (GR)
(74) Representative: Olsson, Jan
(86) International application number: PCT/SE2001/000625
(87) International publication number: WO 2001/089071

(56) References cited:
- WO-A1-99/17435
- DE-A1- 4 035 969
- US-A- 4 807 104
- US-A- 5 345 376
- US-A- 5 680 300

## Description

### FIELD OF THE INVENTION AND PRIOR ART

The invention relates to a device for conversion of alternating voltage into direct voltage and conversely, which comprises a series connection of at least four units arranged on a direct voltage side of the device between two poles thereof, one positive and one negative, each of said units comprising a semiconductor device of turn-off type and a diode connected in anti-parallel therewith, an alternating voltage phase line connected to a first midpoint, called phase output, of the series connection between two units while dividing the series connection into two equal parts, said two poles of the direct voltage side being provided with substantially the same voltage but with different signs with respect to a zero voltage level of the direct voltage side, said device comprising a second midpoint between two said units of one of the parts of the series connection through a flying capacitor connected to a corresponding second midpoint of the other part of the series connection with respect to the phase output, and an arrangement for controlling the semiconductor devices of the units to generate a train of pulses having determined amplitudes according to a pulse width modulation pattern on the phase output of the device by alternatingly connecting the alternating voltage phase line to at least the plus pole of the direct voltage side, the minus pole thereof and each of said second midpoints by making the unit/units between another second midpoint and the direct voltage pole closest thereto and the unit/units between the second midpoint in question and the first midpoint conducting, so as to give the phase output a voltage level corresponding to a sum of the voltage of said closest direct voltage pole and the voltage across the flying capacitor, as well as a method for controlling such a device.

Such devices may be used in all kinds of situations, in which a direct voltage is to be converted into an alternating voltage and conversely, in which examples of such uses are in stations of HVDC-plants (High Voltage Direct Current), in which direct voltage is normally converted into a three-phase alternating voltage or conversely, or in so called back-to-back-stations, where the alternating voltage is firstly converted into a direct voltage and this is then converted into an alternating voltage, as well as in SVC:s (Static Var Compensator), in which the direct voltage side consists of one or more capacitors hanging freely.

The invention is not restricted to any voltage or power levels, but it is particularly suited for voltages on the direct voltage side between 10 and 500 kV.

An advantage of using such so called multi level converters, i.e. converters in which at least three different voltage levels may be "delivered" to said phase output, with respect to so called two level bridges, is that the semiconductor devices of said units may be switched with a considerably lower frequency for obtaining an alternating voltage on the alternating voltage phase line having a determined frequency and quality, so that the losses of the converter device may be reduced considerably. More exactly, the switching frequency of the semiconductor devices in a three level converter may under said conditions be reduced to about 1/3. An advantage of using so called flying capacitors for obtaining additional voltage levels of the phase output besides the voltage level of the two poles of the direct voltage side with respect to a use of so called clamping diodes, is primarily that the semiconductor devices in the latter case have to be controlled in such a way that there will be a non-uniform distribution of switching losses thereon, so that in the practice all semiconductor devices have to be dimensioned for being able to take the maximum load possibly occurring for a separate semiconductor device, since otherwise particular considerations have to be taken to the design of each individual semiconductor device when controlling them. This makes the total cost of the semiconductor devices very high, since some of them will in most operation situations be heavily over-dimensioned. By using flying capacitors instead, such as in the device defined in the introduction, a multi level converter with the possibility to a more even load on the semiconductor devices with respect to switching losses is obtained without using expensive so called clamping diodes or additional semiconductor devices.

A device of the type defined in the introduction is already known through US 5 737 201. The different semiconductor devices are in this device controlled with a fixed frequency according to a fixed pulse width modulation pattern, in which said units connected in series are seen as a number of two level bridges added to each other. Such a fixed switching pattern with a fixed switching frequency functions well under the condition that the conditions are constant, but things may in the practice look different. The load on said alternating voltage phase line may for example suddenly be changed remarkably or other irregularities may occur, which means that especially the levels reached by the voltage on the phase output when connecting any of said second midpoints may deviate substantially from the desired value by the fact that said flying capacitor has been charged or discharged too much. This means that the capacitor has to be over-dimensioned for being able to take such asymmetrical loads. There is also a risk that the converter has to be blocked during a period of time when such variations occur. Furthermore, disturbances, such as harmonics, are generated on the alternating voltage phase line, should the voltage across said flying capacitor deviate from a desired substantially constant level.

Devices of the type defined in the introduction are also known through US 5 706 188 and US 5 940 285, in which the current in said alternating voltage phase line is measured and conducting intervals for the different semiconductor devices and their position in time are made dependent upon the detected current. This is made for avoiding the problems of the control according to a fixed switching pattern of the device firstly discussed, but this control seems to be unnecessarily complicated and it is neither sufficiently flexible and adaptable to varying conditions.

### SUMMARY OF THE INVENTION

The object of the present invention is to provide a device and a method of the type defined in the introduction, which makes it possible to benefit from the advantages of such a device by simple means while simultaneously solving said problems of previously known such devices and methods to a large extent.

This object is according to the invention obtained by providing such a device, which comprises members adapted to measure the direct voltage between the two poles of the direct voltage side, members adapted to measure the voltage across said flying capacitor, members adapted to detect the current direction in said alternating voltage phase line and means adapted to compare the values measured for the direct voltage and the voltage across the capacitor, and the arrangement is, when connecting any of said second midpoints to the phase output for establishing a predetermined voltage level therefor, adapted to make the choice of second midpoint connected to the phase output and thereby which of said units are to be made conducting dependent upon said comparison and the current direction in the alternating voltage phase line so as to cause charging or discharging of the capacitor depending upon this comparison, as well as a method according to the appended independent method claim.

The invention differs fundamentally from the devices and the methods for conversion already known, in which the semiconductor devices of the device are controlled with a fixed frequency, by instead making the control dependent upon the voltage across the capacitor, i.e. the charging degree thereof, with respect to the direct voltage side between the two poles of the direct voltage side, so that when there is a possibility to obtain a predetermined voltage level on said phase output by switching the semiconductor device in different ways the way being most appropriate in the given situation may be utilized. This means a high flexibility of the conversion method, so that it may be adapted to varying conditions of the converter device and lines connected thereto, for obtaining a desired level of the voltage across the capacitor and avoiding disturbances generated as a consequence of the conversion all the time. This means a possibility to continuously consider the operation conditions prevailing to an optimum.

According to a preferred embodiment of the invention the arrangement is, when a relation of the capacitor voltage:the direct voltage resulting from said comparison is above a first limit level, adapted to chose the following connection of one of said second midpoints to the phase output for establishing said predetermined voltage level aiming at discharging the flying capacitor at this connection and, when a relation of the capacitor voltage:the direct voltage is below a second limit level results, to choose the following connection of one of said second midpoints to the phase output for establishing the predetermined voltage level aiming at charging the flying capacitor at this connection. By proceeding in this way when choosing said second midpoint for connection to the phase output for establishing said predetermined voltage level the voltage across the flying capacitor may continuously be controlled towards a desired level located between said two limit levels independently of occurrence of variations of the electric conditions of the converter device.

According to another preferred embodiment of the invention, which constitutes a further development of the embodiment last mentioned, the arrangement is, when relations of the capacitor voltage:the direct voltage resulting from said comparison is located between said first and second limit levels, adapted to control said units so that said second midpoints corresponding to the same predetermined voltage level are connected to the phase output just as often when a predetermined voltage level corresponding to such a connection is to be established thereon. By having a predetermined control frequency with respect to the connection of said second midpoints to the phase output as long as the capacitor voltage:the direct voltage is located between said limit levels, it is possible both to simplify the control of the arrangement of the semiconductor devices and to efficiently keep said relation between said two limit levels without any requirement of any control measure at substantially constant operation conditions, and control measures only have to be taken when the operation conditions are changed considerably. In the case of two second midpoints corresponding to the same pre-determined voltage level of the phase output these are accordingly connected thereto every second time.

According to another preferred embodiment of the invention the device comprises members adapted to predict the direction of the current in the alternating voltage phase line the next time one of said second midpoints is to be connected to the phase output for establishing said predetermined voltage level, and the arrangement is adapted to make said choice dependent upon said predicted current direction in the alternating voltage phase line. By such a prediction the probability is increased that the current direction in the alternating voltage phase line is really causing the charging and discharging, respectively, of said flying capacitor asked for when connecting a said second midpoint to the phase output. Such a prediction is important, since it may be difficult to obtain such a time resolution that the current direction may be measured exactly in connection with the connection of a said second midpoint to the phase output and this connection may be made dependent upon the measurement result obtained. However, such a prediction may find a remedy thereto.

According to another preferred embodiment of the invention the arrangement is, when a predetermined third level is exceeded or a predetermined fourth level of the relation of the capacitor voltage:the direct voltage is underpassed, when connecting one of said second midpoints to the phase output, adapted to control said units to switch over to immediately connect another second midpoint to the phase output instead. The flying capacitor may hereby be protected, so that it may be made smaller and/or a blocking of the converter device as a consequence of a too large deviation of the relation the capacitor voltage:the direct voltage from the value desired may be avoided.

According to another preferred embodiment of the invention the arrangement is, when a change of the direction of the current in the alternating voltage phase line has been measured, adapted to cause an extra commutation by replacing the one of second midpoints then connected to or going to be connected to the phase output by another second midpoint. The result of the control of the converter device may hereby be improved further, since an optimum choice of the current direction through the capacitor may be made on both sides of said direction change and it is avoided that "the wrong" midpoint is connected to the phase output when the current direction is changes.

According to another preferred embodiment of the invention the arrangement is adapted to control the semiconductor devices of the units according to a pulse width modulation pattern for generating a voltage containing a fundamental tone having substantially the same frequency as the alternating voltage of said alternating voltage phase line.

According to another preferred embodiment of the invention the number of said units is four and said predetermined voltage level is substantially zero, and the arrangement is adapted to make said choice between making the outer unit of one part with respect to said phase output and the inner unit of the other part of the series connection conducting or conversely. The device and the method according to the invention are particularly well suited for such a so called three-level converter device, since this will only have one flying capacitor and said choice may then all the time be made so that the voltage across this capacitor is kept at a desired, substantially constant level. The control gets more complicated when more levels than three and thereby more than one flying capacitor are present, since in some cases the control with respect to the connection of second midpoints has to be made so that a charging or discharging of the capacitor judged to have the worst state takes place while considering considerably more parameters than in the three-level case. However, under certain conditions such an embodiment having more than three possible levels of the voltage on the phase output could be well suited.

Further advantages as well as advantageous features of the invention appear from the following description and the other dependent claims.

### BRIEF DESCRIPTION OF THE DRAWINGS

With reference to the appended drawings, below follows a description of preferred embodiments of the invention cited as examples.

In the drawings:
Fig 1 is a simplified circuit diagram illustrating a device according to a first preferred embodiment of the invention,
Fig 2 illustrates how a three-level converter device of the type shown in Fig 1 is conventionally controlled through a sinusoidal pulse width modulation,
Fig 3 is a graph illustrating how different voltages and currents are changed over time when controlling the converter device according to Fig 1 according to the invention,
Figs 4a and 4b are graphs illustrating how the current through the flying capacitor of the device according to Fig 1 is controlled depending upon measured values of the relation capacitor voltage:direct voltage, and
Fig 5 is a simplified view corresponding to Fig 1 of a converter device according to a second preferred embodiment of the invention.

### DETAILED DESCRIPTION OF PREFERRED EMBODIMENTS OF THE INVENTION

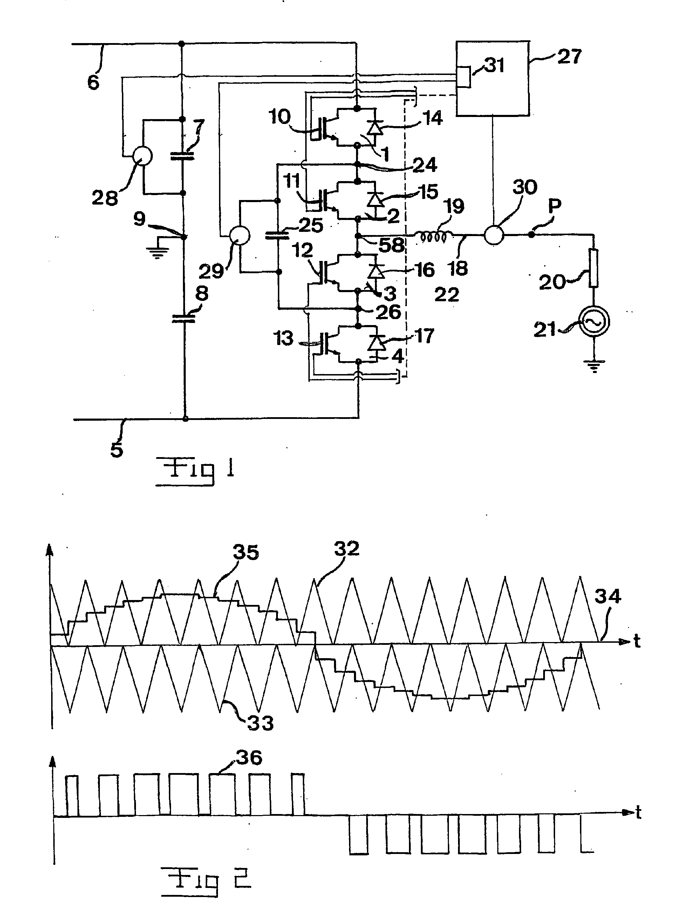

Only the part of the converter device being connected to one phase of an alternating voltage phase line is shown in Fig 1, whereas the number of phases is normally three, but it is also possible that this constitutes the entire converter device, when this is connected to a one-phase alternating voltage network. The converter device is a so called VSC-converter, which has four units 1-4, usually called transistor valves or alternatively thyristor valves, connected in series between the two poles 5, 6 of a direct voltage side of the device. Two capacitors 7, 8 connected in series are arranged between said two poles, and a point 9 therebetween is usually connected to ground, so that in this way the potentials +U/2 and -U/2, respectively, are provided at the respective pole, in which U is the voltage between the two poles 5, 6.

The units 1-4 are each made of a semiconductor device 10-13 of turn-off type, such as an IGBT or a GTO, and a rectifying diode 14-17 connected in anti-parallel therewith, a so called freewheeling diode. Although only one IGBT or GTO per unit is shown, this may stand for a plurality of IGBT:s or GTO:s connected in series and controlled simultaneously, which is also the case, since a comparatively high number of such semiconductor devices is required for taking the voltage to be taken by each unit in the blocking state.

A first midpoint 58 of the series connection between the two units 2 and 3, which constitutes the phase output of the converter, is connected to an alternating voltage phase line 18 through an inductor 19. Said series connection is in this way divided into two equal parts having two units 1, 2 and 3, 4, respectively, of each such part. The alternating voltage phase line is summarized through the symbols for an impedance 20 and an alternating voltage generator 21.

A second midpoint 24 between two said units of one of the parts of the series connection is through a flying capacitor 25 connected to a corresponding, with respect to the phase output, second midpoint 26 of the other part of the series connection.

The device has also an arrangement 27 adapted to control the different semiconductor devices of the units 1-4 and thereby ensure that said phase output is connected to and receives the same potential as the pole 5, the pole 6 or any of said second midpoints 24, 26, which for the midpoint 24 means the potential of the pole 5 with a voltage across the capacitor 25 added thereto and for the midpoint 26 the voltage of the pole 6 minus the voltage across the capacitor 25. This arrangement 27 and the provision thereof is here shown in a very simplified manner, and a separate such arrangement may probably in the practice be arranged on high potential at each individual unit and these receive control signals from a control arrangement located on ground level.

The device has further members 28 schematically indicated and adapted to measure the direct voltage between the two poles of the direct voltage side (here indirectly by measuring the direct voltage across the capacitor 7 and thereby half said direct voltage) and members 29 adapted to measure the voltage across said flying capacitor 25. Moreover, there are members 30 adapted to detect the current direction in the alternating voltage phase line. Said members 28-30 are adapted to send information about their measurement results to the arrangement 27, with which means 31 are associated for comparing the values measured for the direct voltage and the voltage across the capacitor. The arrangement 27 is adapted to make the control of the semiconductor devices of the units 1-4 dependent upon said comparison of the direct voltage and the voltage across the capacitor as well as the current direction detected in the alternating voltage phase line in a way to be explained below. The device may also be provided with members for measuring the current through the capacitor.

It is schematically illustrated in Fig 2 how a pulse width modulation in a conversion of a converter device according to Fig 1 typically takes place. Two specific triangle waves 32, 33 with an amplitude made dependent upon the direct voltage and adjusted to be substantially half of the direct voltage between the two poles of the direct voltage side are applied so that a triangle wave 32 varies between a zero level 34 and a level corresponding to the positive half of the direct voltage, while the other triangle wave varies between the zero level and the negative half of the direct voltage. The frequency of the triangle waves is a multiple of the frequency of a desired reference alternating voltage 35 on the alternating voltage phase line 18, which for example may have a frequency of 50 Hz, while the frequency of the triangle waves may be about 1 kHz. The pulse width modulation is carried out so that the intersecting points between the reference alternating voltage and any of the two triangle waves are determined, so that the pulses 36 with a duration between two consecutive such intersecting points and with an amplitude of substantially half said direct voltage, positive if the reference alternating voltage is located above the positive triangle wave, negative if it is located below the negative triangle wave and substantially on zero level if the reference alternating voltage is located therebetween, is delivered on said phase output.

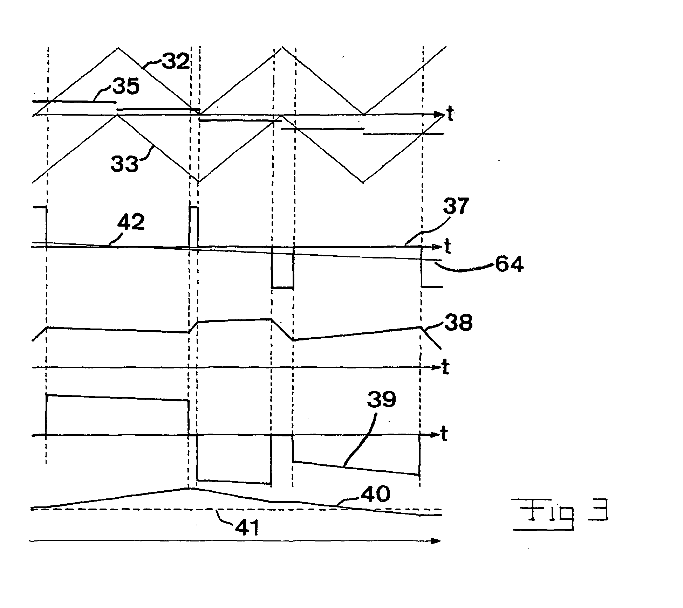

+U/2 may be obtained on the phase output by making the two units 1, 2 conducting by turning the semiconductor devices 10 and 11 on, while -U/2 may be connected to the phase output when the arrangement 27 makes the two units 3, 4 conducting by turning the semiconductor devices 12 and 13 on. However, a voltage being substantially zero may be obtained on the phase output in two different ways, namely either by connecting the second midpoint 24 to the phase output, which is made by ensuring through the arrangement 27 that the units 2 and 4 are conducting or by connecting the second midpoint 26 to the phase output by ensuring through the control arrangement that the units 1 and 3 are conducting. Exactly the presence of a possibility to choose between these two alternatives when there is a desire to have a zero voltage on the phase output and making this choice dependent upon the voltage across the flying capacitor in relation to the direct voltage of the direct voltage side of the converter device and the direction of the current of the alternating voltage phase line 18 for obtaining a charging or discharging of the flying capacitor 25, is what the present invention is based upon and this will now be explained more in detail while making reference to Fig 3.

It is illustrated more in detail in Fig 3 how a converter device according to the invention and according to Fig 1 is controlled and how this influences the different voltages and currents of the device over the time t. A sampled, i.e. a step-wisely changing, reference voltage 35 is drawn here, and when this intersects a triangle wave changes of the potential of the phase output according to the way to proceed described above take place.

The line 37 shows the development of the voltage put on said phase output, the line 38 the current of the alternating voltage phase line, the line 39 the current through the flying capacitor 25 and the line 40 the voltage across the flying capacitor, in which this is compared with half the direct voltage 41 between the poles 5 and 6. The line 64 shows the voltage between the point P and the point 9 in Fig 1.

It appears that the first time a "zero pulse" 42 is to be delivered on the phase output this is made while charging the flying capacitor, i.e. by turning the semiconductor device 10 in the unit 1 on and let the phase current go from the flying capacitor to the phase output through the diode 16 in the unit 3. When then the next zero pulse is to be delivered this is achieved according to the second alternative according to a procedure already determined in advance to alternate between the two possibilities offered. This means that the flying capacitor 25 is discharged (see the current curve 39) by turning the semiconductor device 11 of the unit 2 on and the phase current then flows through the diode 17 of the unit 4, the flying capacitor 25 and the semiconductor device 11 of the unit 2. A comparison between the voltage 40 across the flying capacitor and the level 41 this should have, i.e. half the voltage between the poles 5, 6, is simultaneously carried out by the means 31, and it is then determined that the voltage across the capacitor is too high, so that the next time a zero pulse 44 is to be delivered on the phase output a control procedure is carried out, so that this zero pulse is obtained in the same way as the just preceding zero pulse and thereby a continued discharging of the flying capacitor and thereby an approaching of the voltage 40 thereacross to the optimum level 41 takes place in this state.

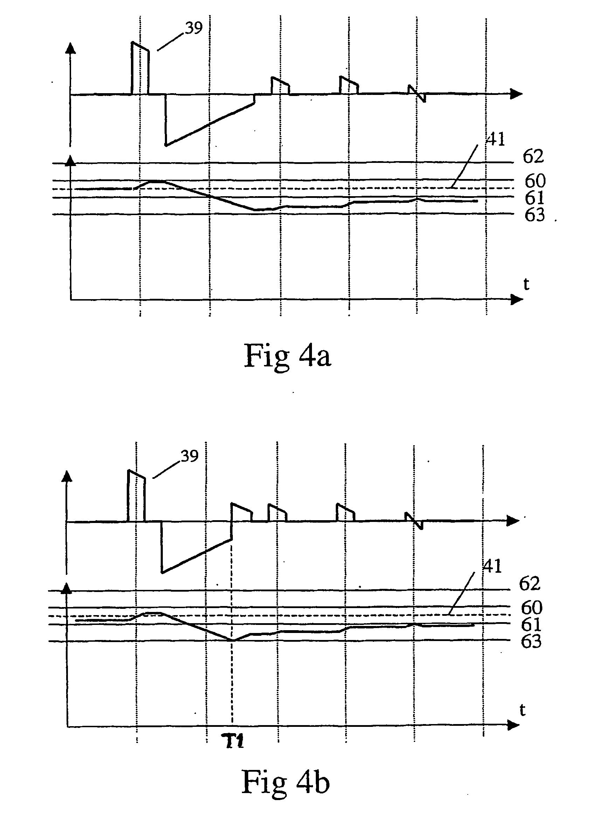

The control principle according to the invention is very schematically illustrated in Figs 4a and 4b, and it is illustrated how the current 39 through the flying capacitor is developed over time t depending upon the magnitude of the voltage 40 across the flying capacitor with respect to an upper, first limit level 60 and a lower, second limit level 61. When the voltage 40 is located between said two limit levels a "zero pulse" is accomplished every second time on the phase output by controlling the semiconductor devices so that the capacitor is charged and every second time so that it is discharged, in which the direction of the phase current measured by the member 30 has of course to be considered when determining which valves 1-4 are to be opened. However, when the voltage 40 exceeds the upper limit level 60, the arrangement 27 chooses the consecutive connection of a said second midpoint to the phase output so that the flying capacitor is discharged, independent of whether such discharging was on the line or not, and the reverse condition prevails when underpassing the lower limit level 61. It is shown in Fig 4a how the capacitor is discharged several times in a row because the voltage 40 is located below the level 61.

A predetermined third level 62 and a predetermined fourth level 63 of the relation of the capacitor votage:the direct voltage are also drawn, which are there for avoiding that this relation will deviate too much from the desired relation. More exactly, the arrangement is, when the third level 62 is exceeded when connecting one of the second midpoints to the phase output, adapted to control said units to switch over to immediately connect another second midpoint to the phase output instead. The corresponding is valid when underpassing the fourth level 63, and it is illustrated in Fig 4b how such an immediate switch-over takes place at the time T1.

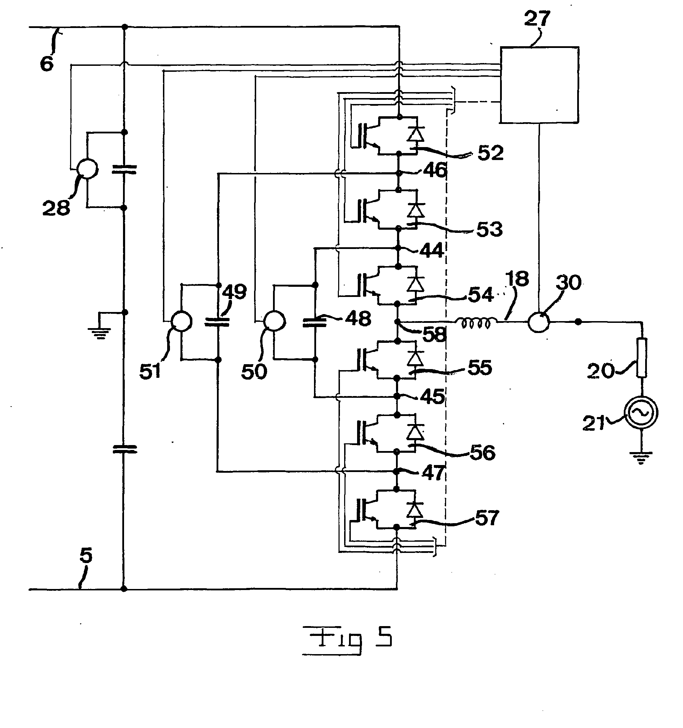

The invention is particularly well suited for three-level converters according to Fig 1, but it is applicable to all types of multilevel converters, and what it may then look like is schematically illustrated in Fig 5 in the form of a four-level converter. Thus, the number of units of a converter device according to the invention is 2n, in which n is an integer ≥ 2, and n+1 possible levels at the phase output is achieved therefor. There are (2n-2)/2 couples of said second midpoints located in corresponding positions with respect to the phase output on opposite sides thereof and connected to each other through a flying capacitor in such a converter device. Thus, in the case shown in Fig 5 there are two couples 44, 45 and 46, 47 of second midpoints having each a flying capacitor 48 and 49, respectively. The levels +U/2, +U/6, - U/6 and -U/2 may be obtained on the phase output of the alternating voltage phase line 18 in a converter device of this type, in which the two intermediate levels may be obtained in different ways, and it is here that the control according to the invention is introduced by measuring the voltage across the two capacitors (members 50, 51), the voltage between the two poles of the direct voltage side and the direction of the phase current in the alternating voltage phase line 18 and compare the voltage levels measured across the capacitors with desired reference voltage levels so as to choose said control so that preferably the capacitor being with respect to percentage most far away from the desired voltage level is charged or discharged when delivering the voltage pulse in question on the phase output. +U/6 may for example be obtained on the phase output either by making the units 52, 53 and 55 conducting or by making the units 57, 53 and 54 conducting. -U/6 may in the same way be achieved either by making the units 56, 57 and 54 conducting or the units 52, 56 and 55 conducting. Accordingly, there is each time a choice between discharging one of the flying capacitors or charging the other flying capacitor. Thus, it is here not two midpoints belonging to the same couple that correspond to the same predetermined voltage level on the phase output.

The invention is of course not in any way restricted to the preferred embodiments described above, but many possibilities to modifications thereof will be apparent to a person with ordinary skill in the art, without departing from the scope of the invention as defined in the appended claims.

Even if it is shown above that the converter device is applied where a substantially sinusoidal current is produced on an alternating voltage phase line, it could very well be applied where the current has a totally different appearance and sometimes may vary very heavily. The design according to the invention of the converter device makes it possible also to manage such situations, by using only one of two possible states at a given desired voltage level out on the phase output in a series of switchings, when the current changes heavily, so as to bring the voltage over the flying capacitor in question back to the desired level. Nothing like that is possible in the devices already known with controlling the valves included therein with fixed frequencies.

The different measurements of voltages and currents of the device according to the invention may of course be made in another way and on other locations than shown in the Figures, which are only there for illustrating the principle according to the invention. The direct voltage between the poles may for example just as well be measured directly and not by measuring the voltage across a capacitor and multiply it by 2.

It would also be conceivable to have a certain phase shift between the two triangle waves in the embodiment according to Figs 1 and 2 with respect to each other in very special applications of the invention.

## Claims

1. A device for converting alternating voltage into direct voltage and conversely, which comprises a series connection of at least four units (1-4) arranged on a direct voltage side of the device between two poles (5,6) thereof, one positive and one negative, each of said units comprising a semiconductor device (10-13) of turn-off type and a diode (14-17) connected in anti-parallel therewith, an alternating voltage phase line (18) connected to a first midpoint (58), called phase output, of the series connection between two units while dividing the series connection into two equal parts, said two poles of the direct voltage side being provided with substantially the same voltage but with different signs with respect to a zero voltage level of the direct voltage side, said device comprising a second midpoint (24, 26, 44-47) between two said units of one of the parts of the series connection connected through a flying capacitor (25, 48, 49) to a corresponding second midpoint (24, 26, 44-47) of the other part of the series connection with respect to the phase output, and an arrangement (27) for controlling the semiconductor devices of the units to generate a train of pulses having determined amplitudes according to a pulse width modulation pattern on the phase output of the device by alternatingly connecting the alternating voltage phase line to at least the plus pole of the direct voltage side, the minus pole thereof and each of said second midpoints by making the unit/units between another second midpoint and the direct voltage pole closest thereto and the unit/units between the second midpoint in question and the first midpoint conducting, so as to give the phase output a voltage level corresponding to a sum of the voltage of said closest direct voltage pole and the voltage across the flying capacitor, ***characterized* in that** it comprises members (28) adapted to measure the direct voltage between the two poles of the direct voltage side, members (29) adapted to measure the voltage (40) across said flying capacitor, members (30) adapted to detect the current direction in said alternating voltage phase line and means (31) adapted to compare the values measured for the direct voltage and the voltage across the capacitor, and that the arrangement is, when connecting any of said second midpoints to the phase output for establishing a predetermined voltage level therefor, adapted to make the choice of second midpoint connected to the phase output and thereby which of said units are to be made conducting dependent upon said comparison and the current direction in the alternating voltage phase line so as to cause charging or discharging of the capacitor (25, 48, 49) depending upon this comparison.

2. A device according to claim 1, ***characterized* in that** the arrangement (27) is, when a relation of the capacitor voltage to the direct voltage results from said comparison above a first limit level (60), adapted to choose the following connection of one of said second midpoints to the phase output for establishing said predetermined voltage level aiming at discharging the flying capacitor (25, 48, 49) at this connection and, when a relation of the capacitor voltage to the direct voltage results below a second limit level (61) to choose the following connection of one of said second midpoints to the phase output for establishing the predetermined voltage level aiming at charging the flying capacitor at this connection.

3. A device according to claim 2, ***characterized* in that** the arrangement is, when relations of the capacitor voltage to the direct voltage resulting from said comparison are located between said first and second limit levels, adapted to control said units so that said second midpoints corresponding to the same predetermined voltage level are connected to the phase output just as often when a predetermined voltage level corresponding to such a connection is to be established thereon.

4. A device according to any of claims 1-3, ***characterized* in that** it comprises members (27, 30) adapted to predict the direction of the current in the alternating voltage phase line the next time one of said second midpoints is to be connected to the phase output for establishing said predetermined voltage level, and that the arrangement is adapted to make said choice dependent upon said predicted current direction in the alternating voltage phase line (28).

5. A device according to any of the preceding claims, ***characterized* in that** the arrangement is, when a predetermined third level (62) is exceeded or a predetermined fourth level (63) of the relation of the capacitor voltage to the direct voltage is under-passed, when connecting one of said second midpoints to the phase output, adapted to control said units to switch over to immediately connect another second midpoint to the phase output instead.

6. A device according to any of the preceding claims, ***characterized* in that** the arrangement (27) is, when a change of the direction of the current in the alternating voltage phase line (18) has been measured, adapted to cause an extra commutation by replacing the one of second midpoints then connected to or going to be connected to the phase output by another second midpoint.

7. A device according to any of the preceding claims, ***characterized* in that** the arrangement (27) is adapted to control the semiconductor devices of the units according to a pulse width modulation pattern for generating a voltage containing a fundamental tone having substantially the same frequency as the alternating voltage of said alternating voltage phase line.

8. A device according to any of the preceding claims, in which the number of said units (1-4) is four and said predetermined voltage level is substantially zero, ***characterized* in that** the arrangement (27) is adapted to make said choice between making the outer unit of one part with respect to said phase output and the inner unit of the other part of the series connection conducting or conversely.

9. A device according to claim 8, ***characterized* in that** the arrangement (27) is adapted to control the semiconductor devices of the units according to a pulse width modulation pattern determined by determining intersection points between a desired reference alternating voltage (35) and any of two specific triangle waves (32, 33) having an amplitude of substantially half of said direct voltage between the two poles of the direct voltage side, in which a triangle wave (32) varies between the zero level and a level corresponding to a positive half of the direct voltage, while the other triangle wave (33) varies between the zero level and the negative half of the direct voltage, and in which the frequency of the triangle waves is a multiple of the frequency of the reference alternating voltage, so that pulses with a duration between two consecutive said intersection points and with an amplitude of substantially half of said direct voltage, positive if the reference alternating voltage is located above the positive triangle wave, negative if it is located below the negative triangle wave and on zero level if the reference alternating voltage is located therebetween, are delivered on said phase output.

10. A device according to claim 9, ***characterized* in that** the arrangement is adapted to utilize two triangle waves (32, 33) being substantially in phase with each other for determining said pulse width modulation pattern.

11. A device according to any of claims 1-7, ***characterized* in that** said series connection comprises 2n units, n being an integer ≥ 3, that it comprises (2n-2)/2 couples of said second mid-points (44-47) located in corresponding positions with respect to the phase output on opposite sides thereof and connected to each other through a flying capacitor (48, 49), that it comprises members (50, 51) adapted to measure the voltage across each of said flying capacitors, and that the arrangement (27) is, when connecting any of said second midpoints to the phase output or establishing a predetermined voltage level thereof, adapted to make the choice of the second midpoint connected to the phase output and thereby which of said units are to be made conducting dependent upon a comparison of the values measured for the direct voltage and the voltage across one or several of said flying capacitors (48, 49) and of the current direction in the alternating voltage phase line for accomplishing a charging or discharging of a determined one of said flying capacitors.

12. A device according to any of the preceding claims, ***characterized* in that** said semiconductor devices (10-13) are IGBT-s (Insulated Gate Bipolar Transistor).

13. A device according to any of claims 1-10, ***characterized* in that** said semiconductor devices (10-13) are GTO-s (Gate Turn-Off Thyristor).

14. A device according to any of the preceding claims, ***characterized* in that** said direct voltage side is formed by a direct voltage network for transmitting high voltage direct current (HVDC) and the alternating voltage phase line (18) belongs to an alternating voltage phase network.

15. A device according to any of claims 1-13, ***characterized* in that** it belongs to a SVC (Static Var Compensator) having the direct voltage side formed by capacitors hanging freely and the alternating voltage phase line belonging to an alternating voltage network.

16. A method for controlling a device for conversion of alternating voltage into direct voltage and conversely, which comprises a series connection of at least four units (1-4) arranged between two poles (5, 6), a positive and a negative, of a direct voltage side of the device, each of said units comprising a semiconductor device of turn-off type (10-13) and a diode (14-17) connected in anti-parallel therewith, an alternating voltage phase line connected to a first midpoint (58), called phase output, of the series connection between two units while dividing the series connection into equal parts, the two poles of the direct voltage side being put on substantially the same voltage with opposite signs with respect to a zero voltage level of the direct voltage side, in which it comprises a second midpoint between two said units of one part of the series connection being connected through a flying capacitor to a corresponding second midpoint of the second part of the series connection with respect to the phase output, and an arrangement (27) for controlling the semiconductor devices of the units, in which the arrangement controls the semiconductor devices of the units so that a train of pulses having determined amplitudes according to a pulse width modulation pattern is created on the phase output of the device by alternatingly connecting the alternating voltage phase line to at least the plus pole of the direct voltage side, the minus pole thereof as well as one of said second midpoints by making the unit/units between another second midpoint and the closest direct voltage pole as well as the unit/units between the respective second midpoint and the first midpoint conducting, for giving the phase output a voltage level corresponding to the sum of the voltage of said closest direct voltage pole and the voltage across the flying capacitor (25, 48, 49), ***characterized* in that** the direct voltage between the two poles of the direct voltage side and the voltage across said flying capacitor are measured, that the current direction in said alternating voltage phase line is detected, that the values measured for the direct voltage and the voltage across the capacitor are compared, and that, when connecting any of said second midpoints to the phase output for establishing a predetermined voltage level thereof, the second midpoint connected to the phase output and thereby which of said units are to be made conducting is selected depending upon said comparison and the current direction in the alternating voltage phase line so as to achieve a charging or discharging of the capacitor depending upon this comparison.

17. A method according to claim 16, ***characterized* in that,** when a relation of the capacitor voltage to the direct voltage results from said comparison above a first limit level (60), the following connection of one of said second midpoints to the phase output for establishing said predetermined voltage level is chosen so that the flying capacitor (25, 48, 49) is discharged by this connection, and that, at a relation of the capacitor voltage to the direct voltage below the second limit level (61) the following connection of one of said second midpoints to the phase output for establishing said predetermined voltage level is selected so that the flying capacitor is charged at this connection.

18. A method according to claim 17, ***characterized* in that** when said comparison results in a relation of the capacitor voltage to the direct voltage located between said first and second limit level, said units are controlled so that said second midpoints corresponding to the same predetermined voltage level are connected to the phase output just as often when a predetermined voltage level corresponding to such a connection is to be established thereon.

19. A method according to any of claims 16-18, ***characterized* in that** the direction the current will have in the alternating voltage phase line the next time one of said second midpoints is to be connected to the phase output for a establishing said predetermined voltage level is predicted, and that the choice of the second midpoint for the next connection to the phase output is made dependent upon said predicted current direction in the alternating voltage phase line.

20. A method according to any of claims 16-19, ***characterized* in that** when the relation of the capacitor voltage to the direct voltage exceeds a predetermined third level or underpasses a predetermined fourth level when connecting one of said second midpoints to the phase output said units are switched over to immediately connect another second midpoint to the phase output instead.

21. A method according to any of claims 16-20, ***characterized* in that**, when a change of the direction of the current in the alternating voltage phase line is measured, an extra commutation is accomplished by replacing the one of the second midpoints then connected to or going to be connected to the phase output by another second midpoint.

22. A method according to any of claims 16-21, ***characterized* in that** the semiconductor devices of the units are controlled according to a pulse width modulation pattern corresponding to a substantially constant frequency of an alternating voltage of said alternating voltage phase line.

23. A method according to any of claims 16-22, ***characterized* in that** it is a device having a series connection of 2n units that is controlled, n being an integer ≥ 3, in which (2n-2)/2 couples of said second midpoints located in corresponding positions with respect to the phase output of opposite sides thereof are connected to each other through a flying capacitor (48, 49), that the voltage is measured across each of said flying capacitors, and that when connecting any of said second midpoints to the phase output for establishing a predetermined voltage level thereof the second midpoint connected to the phase output and thereby which of said units are to be made conducting is selected in dependence of a comparison of the measured values for the direct voltage and the alternating voltage across one or a plurality of said flying capacitors (48, 49) and the current direction in the alternating voltage phase line for accomplishing a charging or discharging of a determined one of said flying capacitors.

## Patentansprüche

1. Ein Gerät zum Konvertieren von Wechselspannung in Gleichspannung und umgekehrt, welches eine Reihenschaltung von mindestens vier Einheiten (1-4) umfasst, die an einer Gleichspannungsseite des Geräts angeordnet sind zwischen dessen Polen (5,6), einer positiv, einer negativ, wobei jede der Einheiten ein Halbleitergerät (10-13) des Abschalttyps umfasst und eine Diode (14-17), die damit antiparallel verbunden ist, eine Wechselspannungsphasenleitung (18), die mit einem ersten Mittenpunkt (58) der Reihenschaltung zwischen zwei Einheiten verbunden ist, der Phasenausgang genannt wird, während er die Reihenschaltung in zwei gleiche Teile teilt, wobei die zwei Pole der Gleichspannungsseite mit im Wesentlichen derselben Spannung, aber mit verschiedenen Vorzeichen bezüglich eines Nullspannungslevels der Gleichspannungsseite bereitgestellt werden, wobei das Gerät einen zweiten Mittenpunkt (24, 26, 44-47) zwischen zwei der Einheiten eines der Teile der Reihenschaltung umfasst, welcher durch einen Flying Capacitor (25, 48, 49) mit einem entsprechenden zweiten Mittenpunkt (24, 26, 44-47) des anderen Teils der Reihenschaltung bezüglich des Phasenausgangs verbunden ist, und eine Anordnung (27) zum Kontrollieren der Halbleitergeräte der Einheiten, um einen Zug von Pulsen, der bestimmte Amplituden gemäß einem Pulsbreitenmodulationsmuster aufweist, an dem Phasenausgang des Geräts zu erzeugen durch abwechselndes Verbinden der Wechselspannungsphasenleitung mit mindestens dem Pluspol der Gleichspannungsseite, dem Minuspol davon und mit jedem der zweiten Mittenpunkte, indem die Einheit/die Einheiten zwischen einem anderen zweiten Mittenpunkt und dem dazu nächsten Gleichspannungspol und die Einheit/die Einheiten zwischen dem besagten zweiten Mittenpunkt und dem ersten Mittenpunkt leitend gemacht wird/werden, um dem Phasenausgang ein Spannungslevel zu verleihen, das einer Summe der Spannung des nächsten Gleichspannungspols und der Spannung über dem Flying Capacitor entspricht, **dadurch gekennzeichnet, dass** es Elemente (28) umfasst, die eingerichtet sind, die Gleichspannung zwischen den zwei Polen der Gleichspannungsseite zu messen, Elemente (29), die eingerichtet sind, die Spannung (40) über den Flying Capacitor zu messen, Elemente (30), die eingerichtet sind, die Stromrichtung in der Wechselspannungsphasenleitung zu detektieren, und ein Mittel (31), das eingerichtet ist, die für die Gleichspannung und die Spannung über den Capacitor gemessenen Werte zu vergleichen, und dass die Anordnung, wenn irgendeiner der zweiten Mittenpunkte mit dem Phasenausgang verbunden ist zum Etablieren eines dafür vorbestimmten Spannungslevels, eingerichtet ist, die Wahl des mit dem Phasenausgang verbundenen zweiten Mittenpunkts zu treffen und **dadurch**, welche der Einheiten leitend gemacht werden sollen in Abhängigkeit von dem Vergleich und der Stromrichtung in der Wechselspannungsphasenleitung, um ein Aufladen oder Entladen des Capacitors (25, 48, 49) in Abhängigkeit von diesem Vergleich zu veranlassen.

2. Ein Gerät nach Anspruch 1, **dadurch gekennzeichnet, dass** die Anordnung (27), wenn sich eine Beziehung der Capacitor-Spannung und der Gleichspannung aus dem Vergleich über einem ersten Grenzlevel (60) ergibt, eingerichtet ist, die folgende Verbindung eines der zweiten Mittenpunkte zu dem Phasenausgang zu wählen zum Etablieren des vorbestimmten Spannungslevels mit dem Ziel, den Flying Capacitor (25, 48, 49) bei dieser Verbindung zu entladen, und, wenn sich eine Beziehung der Capacitor-Spannung zu der Gleichspannung unter einem zweiten Grenzlevel (61) ergibt, die folgende Verbindung eines der zweiten Mittenpunkte zu dem Phasenausgang zu wählen zum Etablieren des vorbestimmten Spannungslevels mit dem Ziel, den Flying Capacitor bei dieser Verbindung zu laden.

3. Ein Gerät nach Anspruch 2, **dadurch gekennzeichnet, dass** die Anordnung, wenn Beziehungen der Capacitor-Spannung zu der Gleichspannung, die sich aus dem Vergleich ergeben, zwischen dem ersten und zweiten Grenzlevel liegen, eingerichtet ist, die Einheiten zu kontrollieren, so dass die zweiten Mittenpunkte, die denselben vorbestimmten Spannungslevel entsprechen, mit dem Phasenausgang genauso oft verbunden werden, wenn ein vorbestimmtes, einer solche Verbindung entsprechendes Spannungslevel daran etabliert werden soll.

4. Ein Gerät nach einem der Ansprüche 1-3, **dadurch gekennzeichnet, dass** es Elemente (27, 30) umfasst, die eingerichtet sind, die Stromrichtung in der Wechselspannungsphasenleitung das nächste Mal vorherzusagen, dass einer der zweiten Mittenpunkte mit dem Phasenausgang verbunden werden soll zum Etablieren des vorbestimmten Spannungslevels, und dass die Anordnung eingerichtet ist, die Wahl in Abhängigkeit von der vorhergesagten Stromrichtung in der Wechselspannungsphasenleitung (18) zu treffen.

5. Ein Gerät nach einem der vorhergehenden Ansprüche, **dadurch gekennzeichnet, dass** die Anordnung, wenn ein vorbestimmtes drittes Level (62) überschritten ist oder ein vorbestimmtes viertes Level (63) der Beziehung der Capacitor-Spannung zu der Gleichspannung unterschritten ist beim Verbinden eines der zweiten Mittenpunkte mit dem Phasenausgang, eingerichtet ist, die Einheiten zu kontrollieren um umzuschalten, um sofort einen anderen zweiten Mittenpunkt mit dem Phasenausgang stattdessen zu verbinden.

6. Ein Gerät nach einem der vorhergehenden Ansprüche, **dadurch gekennzeichnet, dass** die Anordnung (27), wenn ein Wechsel der Stromrichtung in der Wechselspannungsphasenleitung (18) gemessen wurde, eingerichtet ist, eine zusätzliche Kommutierung zu veranlassen durch Ersetzen des einen der zweiten Mittenpunkte, der dann mit dem Phasenausgang verbunden ist oder gerade verbunden wird, durch einen anderen zweiten Mittenpunkt.

7. Ein Gerät nach einem der vorhergehenden Ansprüche, **dadurch gekennzeichnet, dass** die Anordnung (27) eingerichtet ist, die Halbleitergeräte der Einheiten gemäß einem Pulsbreitenmodulationsmuster zu kontrollieren, um eine Spannung zu erzeugen, die einen Grundton umfasst, der im Wesentlichen dieselbe Frequenz wie die Wechselspannung der Wechselspannungsphasenleitung aufweist.

8. Ein Gerät nach einem der vorhergehenden Ansprüche, in welchem die Zahl der Einheiten (1-4) vier ist und das vorbestimmte Spannungslevel im Wesentlichen null ist, **dadurch gekennzeichnet, dass** die Anordnung (27) eingerichtet ist, die Wahl zu treffen, die äußere Einheit eines Teils bezüglich des Phasenausgangs und die innere Einheit des anderen Teils der Reihenschaltung leitend zu machen oder umgekehrt.

9. Ein Gerät nach Anspruch 8, **dadurch gekennzeichnet, dass** die Anordnung (27) eingerichtet ist, die Halbleitergeräte der Einheiten gemäß einem Pulsbreitenmodulationsmuster zu kontrollieren, welches bestimmt ist durch Bestimmen von Schnittpunkten zwischen einer gewünschten Referenzwechselspannung (35) und irgendeiner von zwei spezifischen Dreieckswellen (32, 33), die eine Amplitude von im Wesentlichen der halben Gleichspannung zwischen zwei Polen der Gleichspannungsseite aufweisen, in welchem eine Dreieckswelle (32) zwischen dem Nulllevel und einen Level variiert, das einer positiven Hälfte der Gleichspannung entspricht, während die andere Dreieckswelle (33) zwischen dem Nulllevel und der negativen Hälfte der Gleichspannung variiert, und in welchem die Frequenz der Dreieckswellen ein Vielfaches der Frequenz der Referenzwechselspannung ist, so dass Pulse mit einer Dauer zwischen zwei aufeinanderfolgenden Schnittpunkten und mit einer Amplitude von im Wesentlichen der halben Gleichspannung, positiv, wenn die Referenzwechselspannung sich über der positiven Dreieckswelle befindet, negativ, wenn sie sich unter der negativen Dreieckswelle befindet, und auf dem Nulllevel, wenn die Referenzwechselspannung sich dazwischen befindet, an dem Phasenausgang bereitgestellt sind.

10. Ein Gerät nach Anspruch 9, **dadurch gekennzeichnet, dass** die Anordnung eingerichtet ist, zwei Dreieckswellen (32, 33) zu verwenden, die im Wesentlichen miteinander in Phase sind, um das Pulsbreitenmodulationsmuster zu bestimmen.

11. Ein Gerät nach einem der Ansprüche 1-7, **dadurch gekennzeichnet, dass** die Reihenschaltung 2n Einheiten umfasst, wobei n eine ganze Zahl ≥3 ist, dass es (2n-2)/2 Paare der zweiten Mittenpunkte (44-47) umfasst, die sich in entsprechenden Positionen bezüglich des Phasenausgangs auf entgegengesetzten Seiten davon befinden und miteinander durch einen Flying Capacitor (48, 49) verbunden sind, dass es Elemente (50, 51) umfasst, die eingerichtet sind, die Spannung über jeden der Flying Capacitors zu messen, und dass die Anordnung (27), beim Verbinden irgendeines der zweiten Mittenpunkte mit dem Phasenausgang zum Etablieren eines vorbestimmten Spannungslevels davon, eingerichtet ist, die Wahl des zweiten Mittenpunkts zu treffen, der mit dem Phasenausgang verbunden ist, und damit, welche der Einheiten leitend gemacht werde sollen in Abhängigkeit eines Vergleichs der gemessenen Werte für die Gleichspannung und die Spannung über einen oder mehrere der Flying Capacitors (48, 49) und der Stromrichtung in der Wechselspannungsphasenleitung zum Erreichen eines Ladens oder Entladens eines bestimmten der Flying Capacitors.

12. Ein Gerät nach einem der vorhergehenden Ansprüche, **dadurch gekennzeichnet, dass** die Halbleitergeräte (10-13) IGBTs (Bipolartransistoren mit isolierter Gate-Elektrode) sind.

13. Ein Gerät nach einem der Ansprüche 1-10, **dadurch gekennzeichnet, dass** die Halbleitergeräte (10-13) GTOs (GTO-Thyristoren) sind.

14. Ein Gerät nach einem der vorhergehenden Ansprüche, **dadurch gekennzeichnet, dass** die Gleichspannungsseite durch eine Gleichspannungsnetzwerk gebildet ist zum Übertragen von Hochspannungsgleichstrom (HVDC) und die Wechselspannungsphasenleitung (18) zu einem Wechselspannungsnetzwerk gehört.

15. Ein Gerät nach einem der Ansprüche 1-13, **dadurch gekennzeichnet, dass** es zu einem SVC (Statischer Blindleistungskompensator) gehört, der die Gleichspannungsseite durch freihängende Kondensatoren gebildet und die Wechselspannungsphasenleitung zugehörig zu einem Wechselspanungsnetzwerk aufweist.

16. Ein Verfahren zum Kontrollieren eines Geräts zur Konvertierung von Wechselstrom in Gleichstrom und umgekehrt, welches eine Reihenschaltung von mindestens vier Einheiten (1-4) umfasst, die zwischen zwei Polen (5,6), einer positiv, einer negativ, einer Gleichspannungsseite des Geräts angeordnet sind, wobei jede der Einheiten ein Halbleitergerät (10-13) des Abschalttyps umfasst und eine Diode (14-17), die damit antiparallel verbunden ist, eine Wechselspannungsphasenleitung, die mit einem ersten Mittenpunkt (58) der Reihenschaltung zwischen zwei Einheiten verbunden ist, der Phasenausgang genannt wird, während er die Reihenschaltung in gleiche Teile teilt, wobei die zwei Pole der Gleichspannungsseite auf im Wesentlichen dieselbe Spannung gesetzt werden mit verschiedenen Vorzeichen bezüglich eines Nullspannungslevels der Gleichspannungsseite, in welcher es einen zweiten Mittenpunkt zwischen zwei der Einheiten eines der Teile der Reihenschaltung umfasst, welcher durch einen Flying Capacitor mit einem entsprechenden zweiten Mittenpunkt des zweiten Teils der Reihenschaltung bezüglich des Phasenausgangs verbunden ist, und eine Anordnung (27) zum Kontrollieren der Halbleitergeräte der Einheiten, wobei die Anordnung die Halbleitergeräte der Einheiten kontrolliert, so dass ein Zug von Pulsen, der bestimmte Amplituden gemäß einem Pulsbreitenmodulationsmuster aufweist, an dem Phasenausgang des Geräts erzeugt wird durch abwechselndes Verbinden der Wechselspannungsphasenleitung mit mindestens dem Pluspol der Gleichspannungsseite, dem Minuspol davon und mit einem der zweiten Mittenpunkte, indem die Einheit/die Einheiten zwischen einem anderen zweiten Mittenpunkt und dem dazu nächsten Gleichspannungspol und die Einheit/die Einheiten zwischen dem besagten zweiten Mittenpunkt und dem ersten Mittenpunkt leitend gemacht wird/werden, um dem Phasenausgang ein Spannungslevel zu verleihen, das einer Summe der Spannung des nächsten Gleichspannungspols und der Spannung über dem Flying Capacitor (25, 48, 49) entspricht, **dadurch gekennzeichnet, dass** die Gleichspannung zwischen den zwei Polen der Gleichspannungsseite und die Spannung über dem Flying Capacitor gemessen werden, dass die Stromrichtung in der Wechselspannungsphasenleitung detektiert wird, dass die für die Gleichspannung und die Spannung über den Capacitor gemessenen Werte verglichen werden, und dass, wenn irgendeiner der zweiten Mittenpunkte mit dem Phasenausgang verbunden wird zum Etablieren eines dafür vorbestimmten Spannungslevels, der mit dem Phasenausgang verbundene zweite Mittenpunkt ausgewählt wird und **dadurch**, welche der Einheiten leitend gemacht werden sollen in Abhängigkeit von dem Vergleich und der Stromrichtung in der Wechselspannungsphasenleitung, um ein Aufladen oder Entladen des Capacitors in Abhängigkeit von diesem Vergleich zu erreichen.

17. Ein Verfahren nach Anspruch 16, **dadurch gekennzeichnet, dass,** wenn sich eine Beziehung der Capacitor-Spannung zu der Gleichspannung aus dem Vergleich über einem ersten Grenzlevel (60) ergibt, die folgende Verbindung eines der zweiten Mittenpunkte zu dem Phasenausgang zum Etablieren des vorbestimmten Spannungslevels so gewählt wird, dass der Flying Capacitor (25, 48, 49) durch diese Verbindung entladen wird, und dass, bei einer Beziehung der Capacitor-Spannung zu der Gleichspannung unter einem zweiten Grenzlevel (61), die folgende Verbindung eines der zweiten Mittenpunkte zu dem Phasenausgang zum Etablieren des vorbestimmten Spannungslevels so ausgewählt wird, dass der Flying Capacitor bei dieser Verbindung geladen wird.

18. Ein Verfahren nach Anspruch 17, **dadurch gekennzeichnet, dass,** wenn der Vergleich eine Beziehung der Capacitor-Spannung zu der Gleichspannung ergibt, die zwischen dem ersten und zweiten Grenzlevel liegt, die Einheiten kontrolliert werden, so dass die zweiten Mittenpunkte, die demselben vorbestimmten Spannungslevel entsprechen, genauso oft mit dem Phasenausgang verbunden werden, wenn eine vorbestimmtes, einer solchen Verbindung entsprechendes Spannungslevel darauf etabliert werden soll.

19. Ein Verfahren nach einem der Ansprüche 16-18, **dadurch gekennzeichnet, dass** die Richtung, die der Strom in der Wechselspannungsleitung das nächste Mal haben wird, wenn einer der zweiten Mittenpunkte mit dem Phasenausgang verbunden werden soll zum Etablieren des vorbestimmten Spannungslevels, vorhergesagt wird, und dass die Wahl des zweiten Mittenpunkts für die nächste Verbindung zum Phasenausgang abhängig gemacht wird von der vorhergesagten Stromrichtung in der Wechselspannungsphasenleitung.

20. Ein Verfahren nach einem der Ansprüche 16-19, **dadurch gekennzeichnet, dass,** wenn die Beziehung der Capacitor-Spannung zu der Gleichspannung ein vorbestimmtes drittes Level überschreitet oder ein vorbestimmtes viertes Level unterschreitet beim Verbinden eines der zweiten Mittenpunkte zum Phasenausgang, die Einheiten umgeschaltet werden, um sofort einen anderen zweiten Mittenpunkt mit dem Phasenausgang stattdessen zu verbinden.

21. Ein Verfahren nach einem der Ansprüche 16-20, **dadurch gekennzeichnet, dass,** wenn ein Wechsel der Stromrichtung in der Wechselspannungsphasenleitung gemessen wird, eine zusätzliche Kommutierung erreicht wird durch Ersetzen des einen zweiten Mittenpunkts, der dann mit dem Phasenausgang verbunden ist oder gerade verbunden wird, durch einen anderen zweiten Mittenpunkt.

22. Ein Verfahren nach einem der Ansprüche 16-21, **dadurch gekennzeichnet, dass** die Halbleitergeräte der Einheiten gemäß einem Pulsbreitenmodulationsmuster kontrolliert werden, das einer im Wesentlichen konstanten Frequenz einer Wechselspannung der Wechselspannungsphasenleitung entspricht.

23. Ein Verfahren nach einem der Ansprüche 16-22, **dadurch gekennzeichnet, dass** es ein Gerät ist, das eine Reihenschaltung 2n kontrollierten Einheiten aufweist, wobei n eine ganze Zahl ≥3 ist, in welchem (2n-2)/2 Paare der zweiten Mittenpunkte, die sich in entsprechenden Positionen bezüglich des Phasenausgangs auf entgegengesetzten Seiten davon befinden, miteinander durch einen Flying Capacitor (48, 49) verbunden sind, dass die Spannung über jedem der Flying Capacitors gemessen wird, und dass, beim Verbinden irgendeines der zweiten Mittenpunkte mit dem Phasenausgang zum Etablieren eines vorbestimmten Spannungslevels davon, der zweite Mittenpunkt, der mit dem Phasenausgang verbunden ist, ausgewählt wird und damit, welche der Einheiten leitend gemacht werden sollen, in Abhängigkeit eines Vergleichs der gemessenen Werte für die Gleichspannung und der Wechselspannung über einen oder eine Vielzahl von Flying Capacitors (48, 49) und der Stromrichtung in der Wechselspannungsphasenleitung zum Erreichen eines Ladens oder Entladens eines bestimmten der Flying Capacitors.

## Revendications

1. Dispositif pour convertir une tension alternative en une tension continue et inversement, comprenant une connexion en série d'au moins quatre unités (1-4) placées d'un côté tension continue du dispositif, entre deux pôles (5, 6) de celui-ci, un positif et un négatif, chacune desdites unités comprenant un dispositif semiconducteur (10-13) du type à extinction et une diode (14-17) connectée en antiparallèle avec ceux-ci, une ligne de phase de tension alternative (18) connectée à un premier point médian (58), appelé sortie de phase, de la connexion série entre deux unités tout en divisant la connexion série en deux parties égales, lesdits deux pôles du côté tension continue étant pourvus sensiblement de la même tension mais avec des signes différents par rapport à un niveau de tension zéro du côté tension continue, ledit dispositif comprenant un deuxième point médian (24, 26, 44-47) entre deux dites unités de l'une des parties de la connexion série connectées à travers un condensateur flottant (25, 48, 49) à un deuxième point médian correspondant (24, 26, 44-47) de l'autre partie de la connexion série par rapport à la sortie de phase, et un ensemble (27) pour commander les dispositifs semiconducteurs des unités pour générer un train d'impulsions ayant des amplitudes déterminées selon un motif de modulation de largeur d'impulsions sur la sortie de phase du dispositif en connectant alternativement la ligne de phase de tension alternative au moins au pôle plus du côté tension continue, au pôle moins de celui-ci et à chacun desdits deuxièmes points médians en rendant passantes la ou les unité(s) située(s) entre un autre deuxième point médian et le pôle de tension continue le plus proche de celui-ci et la ou les unité(s) située(s) entre le deuxième point médian en question et le premier point médian, afin de donner à la sortie de phase un niveau de tension correspondant à une somme de la tension dudit pôle de tension continue le plus proche et de la tension aux bornes du condensateur flottant, **caractérisé en ce qu'**il comprend des éléments (28) adaptés pour mesurer la tension continue entre les deux pôles du côté tension continue, des éléments (29) adaptés pour mesurer la tension (40) aux bornes dudit condensateur flottant, des éléments (30) adaptés pour détecter le sens du courant dans ladite ligne de phase de tension alternative et un moyen (31) adapté pour comparer les valeurs mesurées pour la tension continue et la tension aux bornes du condensateur, et **en ce que** l'ensemble est adapté, lors de la connexion de n'importe lequel desdits deuxièmes points médians à la sortie de phase pour établir un niveau de tension prédéterminé pour celle-ci, pour faire le choix du deuxième point médian connecté à la sortie de phase et donc lesquelles desdites unités doivent être rendues passantes en fonction de ladite comparaison et du sens du courant dans la ligne de phase de tension alternative afin de provoquer la charge ou la décharge du condensateur (25, 48, 49) en fonction de cette comparaison.

2. Dispositif selon la revendication 1, **caractérisé en ce que** l'ensemble (27) est, quand un rapport de la tension de condensateur à la tension continue résulte de ladite comparaison au-dessus d'un premier niveau limite (60), adapté pour choisir la connexion suivante de l'un desdits deuxièmes points médians à la sortie de phase pour établir ledit niveau de tension prédéterminé dans le but de décharger le condensateur flottant (25, 48, 49) à cette connexion et, quand un rapport de la tension de condensateur à la tension continue résulte sous un deuxième niveau limite (61), adapté pour choisir la connexion suivante de l'un desdits deuxièmes points médians à la sortie de phase pour établir le niveau de tension prédéterminé dans le but de charger le condensateur flottant à cette connexion.

3. Dispositif selon la revendication 2, **caractérisé en ce que** l'ensemble est, quand les rapports de la tension de condensateur à la tension continue résultant de cette comparaison sont situés entre lesdits premier et deuxième niveaux limites, adapté pour commander lesdites unités de telle manière que lesdits deuxièmes points médians correspondant au même niveau de tension prédéterminé sont connectés à la sortie de phase aussi souvent qu'un niveau de tension prédéterminé correspondant à cette connexion doit être établi dessus.

4. Dispositif selon l'une quelconque des revendications 1 à 3, **caractérisé en ce qu'**il comprend des éléments (27, 30) adaptés pour prédire le sens du courant dans la ligne de phase de tension alternative la prochaine fois que l'un desdits deuxièmes points médians doit être connecté à la sortie de phase pour établir ledit niveau de tension prédéterminé, et **en ce que** l'ensemble est adapté pour faire ledit choix en fonction dudit sens du courant prédit dans la ligne de phase de tension alternative (28).

5. Dispositif selon l'une quelconque des revendications précédentes, **caractérisé en ce que** l'ensemble est, quand un troisième niveau prédéterminé (62) est dépassé ou quand on passe sous un quatrième niveau prédéterminé (63) du rapport de la tension de condensateur à la tension continue, lors de la connexion de l'un desdits deuxièmes points médians à la sortie de phase, adapté pour commander lesdites unités pour commuter pour connecter immédiatement à la place un autre deuxième point médian à la sortie de phase.

6. Dispositif selon l'une quelconque des revendications précédentes, **caractérisé en ce que** l'ensemble (27) est, quand un changement du sens du courant dans la ligne de phase de tension alternative (18) a été mesuré, adapté pour provoquer une commutation supplémentaire en remplaçant celui des deuxièmes points médians qui est connecté ou qui va être connecté à la sortie de phase par un autre deuxième point médian.

7. Dispositif selon l'une quelconque des revendications précédentes, **caractérisé en ce que** l'ensemble (27) est adapté pour commander les dispositifs semiconducteurs des unités selon un motif de modulation de largeur d'impulsions pour produire une tension contenant une fondamentale ayant sensiblement la même fréquence que la tension alternative de ladite ligne de phase de tension alternative.

8. Dispositif selon l'une quelconque des revendications précédentes, dans lequel le nombre desdites unités (1-4) est de quatre et ledit niveau de tension prédéterminé est sensiblement de zéro, **caractérisé en ce que** l'ensemble (27) est adapté pour faire ledit choix entre rendre passante l'unité extérieure d'une partie par rapport à ladite sortie de phase et l'unité intérieure de l'autre partie de la connexion série ou inversement.

9. Dispositif selon la revendication 8, **caractérisé en ce que** l'ensemble (27) est adapté pour commander les dispositifs semiconducteurs des unités selon un motif de modulation de largeur d'impulsions déterminé en déterminant des points d'intersection entre une tension alternative de référence souhaitée (35) et une onde parmi deux ondes triangulaires spécifiques (32, 33) ayant une amplitude sensiblement égale à la moitié de ladite tension continue entre les deux pôles du côté tension continue, dans lequel une onde triangulaire (32) varie entre le niveau zéro et un niveau correspondant à une moitié positive de la tension continue, tandis que l'autre onde triangulaire (33) varie entre le niveau zéro et la moitié négative de la tension continue, et dans lequel la fréquence des ondes triangulaires est un multiple de la fréquence de la tension alternative de référence, de sorte que des impulsions ayant une durée comprise entre deux desdits points d'intersection consécutifs et une amplitude sensiblement égale à la moitié de ladite tension continue, positive si la tension alternative de référence est située au-dessus de l'onde triangulaire positive, négative si elle est située sous l'onde triangulaire négative et au niveau zéro si la tension alternative de référence est située entre elles, sont délivrées sur ladite sortie de phase.

10. Dispositif selon la revendication 9, **caractérisé en ce que** l'ensemble est adapté pour utiliser deux ondes triangulaires (32, 33) qui sont sensiblement en phase entre elles pour déterminer ledit motif de modulation de largeur d'impulsions.

11. Dispositif selon l'une quelconque des revendications 1 à 7, **caractérisé en ce que** ladite connexion série comprend 2n unités, n étant un entier ≥ 3, **en ce qu'**il comprend (2n-2)/2 couples desdits deuxièmes points médians (44-47) situés dans des positions correspondantes par rapport à la sortie de phase sur des côtés opposés de celle-ci et connectés l'un à l'autre à travers un condensateur flottant (48, 49), **en ce qu'**il comprend des éléments (50, 51) adaptés pour mesurer la tension aux bornes de chacun desdits condensateurs flottants, et **en ce que** l'ensemble (27) est, lors de la connexion de n'importe lequel desdits deuxièmes points médians à la sortie de phase ou de l'établissement d'un niveau de tension prédéterminé de celle-ci, adapté pour faire le choix du deuxième point médian connecté à la sortie de phase et donc lesquelles desdites unités doivent être rendues passantes en fonction d'une comparaison des valeurs mesurées pour la tension continue et la tension aux bornes de l'un ou de plusieurs desdits condensateurs flottants (48, 49) et du sens du courant dans la ligne de phase de tension alternative pour accomplir une charge ou une décharge d'un condensateur prédéterminé parmi lesdits condensateurs flottants.

12. Dispositif selon l'une quelconque des revendications précédentes, **caractérisé en ce que** lesdits dispositifs semiconducteurs (10-13) sont des transistors bipolaires à grille isolée (IGBT).

13. Dispositif selon l'une quelconque des revendications 1 à 10, **caractérisé en ce que** lesdits dispositifs semiconducteurs (10-13) sont des thyristors à extinction par la gâchette (GTO).

14. Dispositif selon l'une quelconque des revendications précédentes, **caractérisé en ce que** ledit côté tension continue est formé par un réseau à tension continue pour transmettre un courant continu à haute tension (HVDC) et la ligne de phase de tension alternative (18) appartient à un réseau de phase de tension alternative.

15. Dispositif selon l'une quelconque des revendications 1 à 13, **caractérisé en ce qu'**il appartient à un compensateur statique d'énergie réactive (SVC) dont le côté tension continue est formé par des condensateurs libres et dont la ligne de phase de tension alternative appartient à un réseau de tension alternative.

16. Procédé de commande d'un dispositif pour la conversion d'une tension alternative en une tension continue et inversement, comprenant une connexion série d'au moins quatre unités (1-4) placées entre deux pôles (5, 6), un positif et un négatif, d'un côté tension continue du dispositif, chacune desdites unités comprenant un dispositif semiconducteur du type à extinction (10-13) et une diode (14-17) connectée en antiparallèle avec ceux-ci, une ligne de phase de tension alternative connectée à un premier point médian (58), appelé sortie de phase, de la connexion série entre deux unités tout en divisant la connexion série en parties égales, les deux pôles du côté tension continue étant mis sensiblement à la même tension avec des signes contraires par rapport à un niveau de tension zéro du côté tension continue, dans lequel il comprend un deuxième point médian entre deux dites unités d'une partie de la connexion série connectées à travers un condensateur flottant à un deuxième point médian correspondant de la deuxième partie de la connexion série par rapport à la sortie de phase, et un ensemble (27) pour commander les dispositifs semiconducteurs des unités, dans lequel l'ensemble commande les dispositifs semiconducteurs des unités de telle manière qu'un train d'impulsions ayant des amplitudes déterminées selon un motif de modulation de largeur d'impulsions est créé sur la sortie de phase du dispositif en connectant alternativement la ligne de phase de tension alternative au moins au pôle plus du côté tension continue, au pôle moins de celui-ci ainsi qu'à l'un desdits deuxièmes points médians en rendant passantes la ou les unité(s) située(s) entre un autre deuxième point médian et le pôle de tension continue le plus proche et la ou les unité(s) située(s) entre le deuxième point médian respectif et le premier point médian, afin de donner à la sortie de phase un niveau de tension correspondant à la somme de la tension dudit pôle de tension continue le plus proche et de la tension aux bornes du condensateur flottant (25, 48, 49), **caractérisé en ce que** l'on mesure la tension continue entre les deux pôles du côté tension continue et la tension aux bornes dudit condensateur flottant, **en ce que** l'on détecte le sens du courant dans ladite ligne de phase de tension alternative, **en ce que** l'on compare les valeurs mesurées pour la tension continue et la tension aux bornes du condensateur, et **en ce que**, lors de la connexion de n'importe lequel desdits deuxièmes points médians à la sortie de phase pour établir un niveau de tension prédéterminé de celle-ci, on choisit le deuxième point médian connecté à la sortie de phase et donc lesquelles desdites unités doivent être rendues passantes en fonction de ladite comparaison et du sens du courant dans la ligne de phase de tension alternative afin d'effectuer une charge ou une décharge du condensateur en fonction de cette comparaison.

17. Procédé selon la revendication 16, **caractérisé en ce que,** quand un rapport de la tension de condensateur à la tension continue résulte de ladite comparaison au-dessus d'un premier niveau limite (60), on choisit la connexion suivante de l'un desdits deuxièmes points médians à la sortie de phase pour établir ledit niveau de tension prédéterminé de telle sorte que le condensateur flottant (25, 48, 49) est déchargé par cette connexion, et **en ce que**, pour un rapport de la tension de condensateur à la tension continue sous le deuxième niveau limite (61), on choisit la connexion suivante de l'un desdits deuxièmes points médians à la sortie de phase pour établir ledit niveau de tension prédéterminé de telle sorte que le condensateur flottant est chargé à cette connexion.

18. Procédé selon la revendication 17, **caractérisé en ce que,** quand ladite comparaison résulte en un rapport de la tension de condensateur à la tension continue situé entre lesdits premier et deuxième niveaux limites, lesdites unités sont commandées de telle manière que lesdits deuxièmes points médians correspondant au même niveau de tension prédéterminé sont connectés à la sortie de phase aussi souvent qu'un niveau de tension prédéterminé correspondant à cette connexion doit être établi dessus.

19. Procédé selon l'une quelconque des revendications 16 à 18, **caractérisé en ce que** l'on prédit le sens que va avoir le courant dans la ligne de phase de tension alternative la prochaine fois que l'un desdits deuxièmes points médians doit être connecté à la sortie de phase pour établir ledit niveau de tension prédéterminé, et **en ce que** l'on fait le choix du deuxième point médian pour la connexion suivante à la sortie de phase en fonction dudit sens du courant prédit dans la ligne de phase de tension alternative.

20. Procédé selon l'une quelconque des revendications 16 à 19, **caractérisé en ce que,** quand le rapport de la tension de condensateur à la tension continue dépasse un troisième niveau prédéterminé ou passe sous un quatrième niveau prédéterminé lors de la connexion de l'un desdits deuxièmes points médians à la sortie de phase, lesdites unités sont commutées pour connecter immédiatement à la place un autre deuxième point médian à la sortie de phase.

21. Procédé selon l'une quelconque des revendications 16 à 20, **caractérisé en ce que,** quand on mesure un changement du sens du courant dans la ligne de phase de tension alternative, on accomplit une commutation supplémentaire en remplaçant celui des deuxièmes points médians qui est connecté ou qui va être connecté à la sortie de phase par un autre deuxième point médian.

22. Procédé selon l'une quelconque des revendications 16 à 21, **caractérisé en ce que** les dispositifs semiconducteurs des unités sont commandés selon un motif de modulation de largeur d'impulsions correspondant à une fréquence sensiblement constante d'une tension alternative de ladite ligne de phase de tension alternative.

23. Procédé selon l'une quelconque des revendications 16 à 22, **caractérisé en ce que** c'est un dispositif ayant une connexion série de 2n unités qui est commandé, n étant un entier ≥ 3, dans lequel (2n-2)/2 couples desdits deuxièmes points médians situés dans des positions correspondantes par rapport à la sortie de phase sur des côtés opposés de celle-ci sont connectés l'un à l'autre à travers un condensateur flottant (48, 49), **en ce que** la tension est mesurée aux bornes de chacun desdits condensateurs flottants, et **en ce que** lors de la connexion de n'importe lequel desdits deuxièmes points médians à la sortie de phase pour établir un niveau de tension prédéterminé de celle-ci, on choisit le deuxième point médian connecté à la sortie de phase et donc lesquelles desdites unités doivent être rendues passantes en fonction d'une comparaison des valeurs mesurées pour la tension continue et la tension alternative aux bornes de l'un ou de plusieurs desdits condensateurs flottants (48, 49) et du sens du courant dans la ligne de phase de tension alternative pour accomplir une charge ou une décharge d'un condensateur déterminé parmi lesdits condensateurs flottants.
